# EUROPÄISCHE PATENTANMELDUNG

(11) **EP 4 173 795 A1**
(43) Veröffentlichungstag der Anmeldung: **03.05.2023**
(21) Anmeldenummer: 22204325.9
(22) Anmeldetag: 28.10.2022
(51) Int. Cl.: B29C 48/08, C08L 89/06, C09H 9/02, C08J 3/18, C08J 5/18, C08K 5/053, B29C 51/00, B29C 51/08, B29C 51/02

(54) **VERFAHREN ZUR HERSTELLUNG VON GELATINE-FORMTEILEN**

(30) Priorität: 29.10.2021 DE 102021128244
(71) Anmelder: Gelinova GmbH, 74933 Neidenstein (DE)
(72) Erfinder: Koepff, Peter, 69121 Heidelberg (DE)
(74) Vertreter: Schuck, Alexander

(57) **Zusammenfassung**

Verfahren zur Herstellung einer Gelatinefolie mit den Schritten:
a) Eindosieren von Pulvergelatine, gegebenenfalls von Kollagenhydrolysat, gegebenenfalls von Additiven und von Wasser in einen Extruder,
b) Auflösen der Pulvergelatine, gegebenenfalls von Kollagenhydrolysat und gegebenenfalls von Additiven, in Wasser unter Einwirkung von Scherkräften in dem Extruder, wobei eine wässrige Gelatinelösung mit einem Feststoffgehalt von 30 bis 50 Gew.-% erhalten wird,
c) Entgasen durch Anlegen von Unterdruck an die wässrige Gelatinelösung, wobei eine luftblasenarme oder luftblasenfreie wässrige Gelatinelösung erhalten wird,
d) Ausgießen der wässrigen Gelatinelösung durch eine Schlitzdüse auf einen Träger,
e) Erstarren lassen der Gelatinelösung auf dem Träger zu einer Gelatineschicht,
f) Trocknen der Gelatineschicht zu einer Gelatinefolie.

## Beschreibung

Die Erfindung betrifft ein Verfahren zur Herstellung von Gelatinefolie, die Gelatinefolie selbst, deren Verwendung als Tiefziehfolie sowie ein Verfahren zur Herstellung von Gelatine-Formteilen.

Angesichts der zunehmenden Kritik an Kunststoffen und deren fehlender biologischer Abbaubarkeit besteht ein großer Bedarf an Kunststoff-Ersatzprodukten aus biologisch abbaubarem Material, insbesondere an biologisch abbaubaren Verpackungen auf Basis nachwachsender Rohstoffe.

In DE 38 43 844 C1 ist ein Verfahren zur Herstellung von Gelatinefolien beschrieben, bei dem Pulvergelatine unter Zusatz von 3 bis 40 Gew.-% Wasser bei erhöhtem Druck und erhöhterTemperatur in einem Extruder plastifiziert wird, und die plastifizierte Masse durch eine Schlitzdüse gepresst wird. Die Gelatinefolie wird zu Blattgelatine für den Nahrungsmittelsektor verarbeitet.

Die DE 38 27 061 C1 betrifft ein Verfahren zur Herstellung von Gelatinegranulat, bei dem man als Ausgangsstoff Pulvergelatine und/oder gepulvertes Gelatinehydrolysat, gegebenenfalls zusammen mit einem Weichmacher, einem Härter, einem Füllstoff und/oder einem Farbstoff, in einen Extruder einbringt, den Ausgangsstoff im Extruder unter Anwendung von Druck, Scherkraft und erhöhter Temperatur plastifiziert, die plastifizierte Masse extrudiert und das Extrudat granuliert. Das erhaltene Granulat kann auf einer Flachfolienanlage zu Tiefziehfolie verarbeitet werden.

Aufgabe der Erfindung ist es, ein Verfahren zur Herstellung von Gelatinefolie, die als Tiefziehfolie zur Herstellung von Gelatine-Formkörpern geeignet ist, bereitzustellen, das ohne den Umweg über die Herstellung von Gelatine-Granulat auskommt.

Die Aufgabe wird gelöst durch ein Verfahren zur Herstellung einer Gelatinefolie mit den Schritten:
a) Eindosieren von Pulvergelatine, gegebenenfalls von Kollagenhydrolysat, gegebenenfalls von Additiven und von Wasser in einen Extruder,
b) Auflösen der Pulvergelatine, gegebenenfalls von Kollagenydrolysat und gegebenenfalls von Additiven, in Wasser unter Einwirkung von Scherkräften in dem Extruder, wobei eine wässrige Gelatinelösung mit einem Feststoffgehalt von 30 bis 50 Gew.-% erhalten wird,
c) Entgasen durch Anlegen von Unterdruck an die wässrige Gelatinelösung, wobei eine luftblasenarme oder luftblasenfreie wässrige Gelatinelösung erhalten wird,
d) Ausgießen der wässrigen Gelatinelösung durch eine Schlitzdüse auf einen Träger,
e) Erstarren lassen (Gelierung) der Gelatinelösung auf dem Träger zu einer Gelatineschicht,
f) Trocknen der Gelatineschicht zur Gelatinefolie.

In Schritt a) werden Pulvergelatine, gegebenenfalls Kollagenhydrolysat, gegebenenfalls Additive und Wasser in einen Extruder eindosiert.

Gelatine ist ein gereinigtes Protein, welches durch partielle Hydrolyse aus dem Skleroprotein (Gerüsteiweiß) Kollagen gewonnen wird. Aufgrund der Verschiedenartigkeit der in der Gelatineproduktion eingesetzten Rohstoffe, nämlich Hautmaterial von Rindern und Kälbern, Schweineschwarten und Ossein (entmineralisierte, meist zerkleinerte Knochen), sowie der technologisch sehr unterschiedlichen Herstellungsverfahren variiert die gewonnene Gelatine in ihren chemischen und physikalischen Eigenschaften erheblich.

Gewöhnlich wird das Rohmaterial einem alkalischen Aufschluss, z.B. mittels Kalkmilch oder Natronlauge, unterworfen und anschließend in einer im wesentlichen neutralen Lösung ausgeschmolzen und extrahiert. Daneben ist auch das sogenannte saure Aufschlussverfahren bekannt, bei dem die alkalische Vorbehandlung entfällt und in saurem Medium ausgeschmolzen wird.

Hauptbestandteil der Rohmaterialien ist das sogenannte Tropokollagen, ein Proteinmolekül. Gelatine besteht aus einem Gemisch verschiedener Bruchstücke des Tropokollagens, die beim sauren oder alkalischen Abbau entstehen. Man unterscheidet als Hauptbestandteile die vier folgenden Fraktionen, die je nach Herkunft der Gelatine in verschiedenen Mengenverhältnissen vorliegen:
1. alpha-Gelatine: Intakte alpha-Polypeptidketten, Molekulargewicht 9,5 × 10⁴,
2. Oligomere der alpha-Ketten, bestehend aus 2 bis 15 verknüpften alpha-Ketten, Molekulargewicht 10⁵ - 10⁶,
3. "Mikrogel": Polymere von bis zu 1000 verknüpften alpha-Ketten, Molekulargewicht 10⁷ - 10⁸,
4. "Peptide": Verschieden große Spaltstücke der alpha-Ketten, Molekulargewicht 1 - 9 × 10⁴.

Eine bevorzugt verwendete Gelatine kann wie in EP 0 025 494 A1 beschrieben hergestellt werden. Diese zeichnet sich dadurch aus, dass der Gehalt an Bruchstücken der alpha-Gelatine (Peptide) mit einem Molekulargewicht von höchstens 9 × 10⁴ kleiner als 25 Gew.-% ist, dass ihr Gehalt an Mikrogel 5 bis 15 Gew.-%, an Oligomeren der alpha-Gelatine (n = 2 bis 15) 30 bis 70 Gew.-% und an alpha-Gelatine 20 bis 60 Gew.-% beträgt. Ferner zeichnet sie sich durch eine hohe Viskosität, im Allgemeinen oberhalb von 180 mP (millipoise), vorzugsweise von 200 bis 350 mP, insbesondere von 200 bis 300 mP aus, wobei sich diese Viskositätswerte auf eine Lösung von 10 g Gelatine in 100 ml Wasser bei 60° C beziehen.

Bis zu 50 Gew.-% der Gelatine können durch Kollagenhydrolysat ersetzt sein. Dabei handelt es sich um nicht gelierende Kollagenprodukte vorzugsweise in Pulverform, die durch Hydrolyse unter hohem Druck- und hoher Temperatur, mittels Säure oder Lauge oder enzymatisch aus kollagenreichem Rohmaterial wie Haut oder Knochen oder durch Abbau von Gelatine selbst gewonnen wurden.

In einer Ausführungsform des erfindungsgemäßen Verfahrens werden bis zu 30 Gew.-% Kollagenhydrolysat, bezogen auf die Summe aus Pulvergelatine und Kollagenhydrolysat, zudosiert. In einer weiteren Ausführungsform wird kein Kollagenhydrolysat zudosiert. Gelatine und Kollagenhydrolysat machen mindestens 70 %, bevorzugt mindestens 85 % des Feststoffgehalts der wässrigen Gelatinelösung aus.

Zusätzlich können Additive, ausgewählt aus der Gruppe bestehend aus Weichmachern, Vernetzern und Farbmitteln, in den Extruder eindosiert werden.

Als Weichmacher kommen beispielsweise in Frage: Glycerin, Mannit, Sorbit, Fett, Fettsäure, Seife, modifizierte oder native Stärke, Ethylenglykol, Polyethylenglykol, Mono-, Di-, Triglycerinacetat, Zuckerfettsäureester, Dimethylensulfoxid, 2,2,2-Trifluorethanol und Propylenglykol. Die Menge an Weichmacher kann insbesondere auch 5 bis 30 Gew.-%, vorzugsweise 5 bis 10 Gew.-%, bezogen auf den Feststoffgehalt, betragen. Der Feststoffgehalt umfasst alle Komponenten außer Wasser.

In einer bevorzugten Ausführungsform des erfindungsgemäßen Verfahrens wird Glycerin als Weichmacher zudosiert.

Als Vernetzungsmittel (Härter) kommen in Frage: Aldehyd, Dialdehyd, Moleküle mit mehrfacher Aldehydfunktion, Diisocyanat, Dialdehydstärke, Acrylsäure, Acrylat, Hexamethylendiamin, Styrol, reaktives Melaminderivat und/oder Acrolein. Als Vernetzungsmittel kommen insbesondere auch Glycidylacrylate und Glycidylmethacrylate in Frage. Die Menge an Vernetzungsmittel kann 0,1 bis 10 Gew.-%, vorzugsweise 0,5 bis 5 Gew.-%, bezogen auf den Feststoffgehalt, betragen.

In EP 0 633 902 B1 ist beschrieben, welche chemisch veränderten Gelatinen als Rohstoff für das Extruderverfahren zur Herstellung von biologisch abbaubarem, wasserresistentem Polymermaterial eingesetzt werden können.

Die Menge an Farbmitteln, beispielsweise Titandioxid, kann 0,1 bis 3 Gew.-%, vorzugsweise 0,5 bis 2 Gew.-%, bezogen auf den Feststoffgehalt, betragen. Weitere geeignete Farbmittel sind Chinolingelb (E104), Azorubin (E122) und echtes Karmin (zur Herstellung von roter Blattgelatine), Tartrazin (E102) und Amaranth (E123) für rote Blattgelatine.

In einem Schritt b) wird die Pulvergelatine, gegebenenfalls das Kollagenhydrolysat, vorzugsweise in Pulverform, und gegebenenfalls Additive, in dem Extruder unter Einwirkung von Scherkräften in Wasser als Lösungsmittel aufgelöst, wobei eine wässrige Gelatinelösung mit einem Feststoffgehalt von 30 bis 50 Gew.-% erhalten wird. Bevorzugt beträgt der Feststoffgehalt der Lösung 30 bis 45 Gew.-%, besonders bevorzugt 33 bis 45 Gew.-% und ganz besonders bevorzugt 33 bis 41 Gew.-%.

Das Gewichtsverhältnis von Pulvergelatine und, falls mit eingesetzt, Kollagenhydrolysat zu Wasser beträgt vorzugsweise von 1 : 1 bis 1 : 1,8.

Bei dem erfindungsgemäßen Verfahren wird die Gelatine ohne Vorquellung in einem Extruder, insbesondere einem Schneckenextruder, direkt mit Wasser bei erhöhter Temperatur und erhöhtem Druck vermischt und so eine Auflösung unter Einwirkung der Scherkräfte des Extruders bewirkt.

Bei dem Extruder handelt es sich im Allgemeinen um einen Doppelschneckenextruder mit gleichläufig oder gegenläufig drehenden Schnecken. Besonders bevorzugt ist ein Doppelschneckenextruder mit gegenläufig drehenden Schnecken.

Der Extruder ist im Allgemeinen ein Mehrzonenextruder mit mehreren Dosierstellen und mehreren separat beheizbaren Zonen. Die Zonen des Extruders werden im Allgemeinen auf Temperaturen im Bereich von 30 und 140°C, vorzugsweise 50 bis 90°C beheizt.

Die Pulvergelatine, gegebenenfalls das Kollagenhydrolysat, gegebenenfalls die Additive und das Wasser werden im Allgemeinen über mehrere Dosierstellen in eine oder mehrere Zonen des Extruders eindosiert. Das Wasser kann ein oder mehrere Additive, beispielsweise Weichmacher, enthalten.

In einem Schritt c) wird durch Anlegen von Unterdruck an die wässrige Gelatinelösung diese entgast, wobei eine luftblasenarme oder luftblasenfreie wässrige Gelatinelösung erhalten wird. Das Entgasen kann in dem Extruder selbst durch Anlegen von Unterdruck, beispielsweise von 100 bis 500 mbar, an eine oder mehrere Zonen des Extruders erfolgen. Das Entgasen kann auch in einer separaten Vakuumapparatur erfolgen. Dabei können handelsübliche Vakuumapparate, beispielsweise der Firmen FrymaKoruma oder Romaco, eingesetzt werden.

Sehr gut hat sich bei der Durchführung des erfindungsgemäßen Verfahrens ein Doppelschneckenextruder mit zwei sich gegenläufig drehenden Schnecken bewährt. Dieser Extruder kann beispielsweise in 9 bis 15 Zonen unterteilt sein, die auf unterschiedliche Temperaturen aufgeheizt werden können.

Beispielsweise kann der gegenläufig Doppelschneckenextruder 9 Arbeitszonen aufweisen. Aus einem Vorratsgefäß wird die Pulvergelatine in die erste Zone des Extruders eindosiert, wobei diese Zone vorzugsweise bei Raumtemperaturen gehalten oder gekühlt wird. In die nachfolgenden Zonen, beispielsweise in die 2. und 5. Zone, wird aus einem weiteren Vorratsgefäß Wasser, gegebenenfalls im Gemisch mit einem Polyalkohol, insbesondere Glycerin, Sorbit oder eine Mischung dieser Stoffe, eindosiert. Die Doppelschnecken des Extruders vermischen unter Einwirkung der üblichen Scher- und Knetkräfte die Gelatine mit dem Wasser als Lösungsmittel. Die Zonen 2 bis 9 des Extruders sind zumeist progressiv auf Temperaturen aufgeheizt, die zwischen 30 und 140°C liegen können. In der letzten Zone des Extruders, die mit einem Auslass für die produzierte Gelatinelösung versehen ist, herrscht bevorzugt eine Temperatur von unter 100°C.

An eine der letzten Zonen des Extruders, beispielsweise an die drittletzte Zone, kann eine Unterdruckpumpe angeschlossen werden, die in diesem Bereich einen Unterdruck, beispielsweise von 200 bis 400 mbar, erzeugt. In den davor gelegenen Zonen herrscht in der Regel ein Überdruck, der zwischen 5 und 100 bar liegen kann und die Vermischung der Gelatine mit dem wässrigen Lösungsmittel sowie die Auflösung der Gelatine in dem wässrigen Lösungsmittel begünstigt.

Die Zeit, die zwischen dem Eingeben der Pulvergelatine in den Extruder bis zum Austreten der Gelatinelösung aus dem Auslass des Extruders verstreicht, kann relativ kurz gewählt werden. Sie kann beispielsweise 1 bis 6 Minuten betragen. Die kontinuierlich aus dem Auslass ausfließende Gelatinelösung kann in einem Gefäß aufgefangen und einer weiteren Verarbeitung zugeführt werden. Die in der beschriebenen Weise gewonnene Gelatinelösung ist luftblasen- und stippenfrei, d.h. sie enthält keinerlei Gelatineteilchen, die nicht oder nur unvollkommen aufgelöst sind.

Alternativ zur Entgasung im Extruder kann die Gelatinelösung auch in einer dem Extruder nachgeschalteten Vakuumapparatur entgast werden.

In einem Schritt d) wird die wässrige Gelatinelösung durch eine Schlitzdüse auf einen Träger ausgegossen. In Schritt e) erstarrt die Gelatinelösung auf dem Träger zu einer Gelatineschicht.

Durch Einstellung der Schlitzdüse lassen sich Folienstärken im Bereich von 10 bis 3 000 Mikrometern erzielen. Bevorzugt sind Folienstärken im Bereich von 30 bis 500 Mikrometern, besonders bevorzugt im Bereich von 100 bis 350 Mikrometern.

Beim Ausgießen weist die Gelatinelösung im Allgemeinen eine Temperatur von 50 bis 80°C auf.

Aus der photographischen Industrie (Silbersalz-Photographie) ist bekannt, dass mehrere Schichten gleichzeitig gegossen wurden, ohne sich zu vermischen. Möglich sind bis zu 11 oder 12 Schichten im Kaskadenguss. Es wurde gefunden, dass man den oben beschriebenen gleichzeitigen Guss mehrerer Schichten im Rahmen des erfindungsgemäßen Verfahrens analog durchführen kann. Der Schlitzgießer weist dabei 2 oder 3 Schlitze auf, mittels derer unterschiedlich zusammengesetzte Gelatinelösungen gleichzeitig auf den Träger aufgebracht werden können (Sol-Gel-Übergang). Die einzelnen Schichten können wie oben beschrieben zusammengesetzt sein und die bereits genannten Additive, Weichmacher, Härtungsmittel, u.a. enthalten.

Bei dem Träger handelt es sich vorzugsweise um ein Prozessband, beispielsweise aus Polyester, Polypropylen, Polycarbonat oder Polyethylenterephthalat.

In Schritt f) wird die erstarrte Gelatineschicht zur Gelatinefolie getrocknet. Dazu wird sie, im Allgemeinen auf dem Prozessband, über eine Trocknungsstrecke geführt. Im Allgemeinen erfolgt die Trocknung bei einer Temperatur von 20 bis 90 °C während einer Trocknungsdauer von beispielsweise 45 bis 90 min. Das Prozessband durchläuft im Allgemeinen mehrere Trocknungskammern, deren Temperaturen zonenweise ansteigen. Der Volumenstrom derTrocknungsluft und deren Feuchte werden geregelt und kontrolliert eingestellt. Frischluft wird angesaugt, gefiltert, mit Lithiumchlorid-Lösung zur Entkeimung und zur Entfeuchtung behandelt und automatisch auf eine Eingangsfeuchte von 6 bis 12 g/kg eingestellt.

Nach dem Trocknungsschritt f) wird die getrocknete Gelatinefolie von dem Prozessband delaminiert.

Schritt f) kann einen Vor- und einen Nachtrocknungsschritt umfassen, wobei die vorgetrocknete Gelatinefolie von dem Prozessband delaminiert wird und ohne Träger einem Nachtrocknungsschritt unterworfen wird.

So kann die Gelatineschicht mit einer Restfeuchte von 12 bis 20 Gew.-%, vorteilhafterweise 15 bis 17 Gew.-%, vom Prozessband delaminiert und als freie Gelatinefolie einem Nachtrockner zugeführt werden. Dieser arbeitet nach dem oben bereits beschriebenen Prinzip.

Es resultiert eine getrocknete Gelatinefolie mit einer Restfeuchte von im Allgemeinen 5 bis 25 Gew.-%, bevorzugt 10 bis 15 Gew.-%.

Die delaminierte Folie kann Rolltendenz aufweisen, den aus der photographischen Industrie (Silbersalzphotographie) bekannten Curl, dort kompensiert durch Übertrocknung der Gelatineschicht und Rehydratation, aber auch durch Aufbringen einer non curl-Schicht auf der Rückseite des Trägers.

Es wurde nun überraschend gefunden, dass eine zum Curl neigende Gelatinefolie durch Exposition gegen einen IR-Strahler zur Planlage gebracht werden kann. Dabei kann die Gelatinefolie im Durchlauf an einem IR-Strahler vorbei in 1 bis 10 Sekunden auf eine Produkttemperatur von 40 bis 90°C, vorteilhafterweise auf 50 bis 60°C erwärmt werden. Die so behandelte Folie zeigt Planlage, volle Elastizität (Faltbarkeit) und weist keine Welligkeit mehr auf, ist gut zu schneiden und kann üblichen weiteren Verarbeitungsschritten unterworfen werden.

In bestimmten Ausführungsformen des erfindungsgemäßen Verfahrens wird die von dem Prozessband delaminierte, getrocknete Gelatinefolie also zusätzlich mit einem IR-Strahler behandelt.

In einer weiteren Ausführungsform der Erfindung wird die getrocknete Gelatinefolie mit Formaldehyd nachbehandelt. Die Nachbehandlung kann durch Intkontaktbringen der getrockneten Gelatinefolie mit einem Formaldehyd enthaltenden Gas oder mit einer Formaldehyd enthaltenden Lösung erfolgen.

Es wurde gefunden, dass man die getrocknete Gelatinefolie mit einer Restfeuchte von beispielsweise 10 bis 15 Gew.-% auch einer Nachbehandlung mit Formaldehyd unterziehen kann. So kann die Gelatinefolie einer formaldehydhaltigen Gasatmosphäre im Durchlauf ausgesetzt werden, so dass gasförmiges Formaldehyd adsorbiert wird und zu einer Vernetzung der Gelatinemoleküle führt. Dieser Prozess ist von der Herstellung medizinischer Gelatineschwämme her bekannt. Der Vorteil ist, dass dieser Schwamm, bedingt durch die Vernetzung, sich bei medizinischen Anwendungen (Chirurgie, Dentalmedizin) im Körper verzögert auflöst. Analog verhält sich überraschenderweise eine analog behandelte erfindungsgemäß hergestellte Gelatinefolie. Diese chemische Modifikation bewirkt auch eine partielle Hydrophobierung der Gelatinefolie.

In einer weiteren Ausführungsform kann die Gelatinefolie im Durchlauf für kurze Zeit mit einer wässrig-acetonischen verdünnten Formaldehyd-Lösung in Kontakt gebracht werden (Tauchverfahren). So können magensaftresistente Kapseln aus Weichgelatine hergestellt werden. Ganz analog wird durch eine derartige Behandlung die Gelatinefolie chemisch so modifiziert, dass diese hydrophobiert und damit partiell feuchtigkeitsunempfindlicher wird.

In einer weiteren Ausführungsform kann die Gelatinefolie einem beidseitigen Sprühprozess oder Tauchverfahren unterzogen werden, wobei beidseitig eine wasserabweisende äußere Schicht erzeugt wird. Eine solche Gelatinefolie ist dann auch zur Verpackung von feuchten Stoffen geeignet, da sie, je nach Behandlungsbedingungen, mehr oder weniger stark hydrophobiert ist.

Die erstarrte Gelatinefolie kann zwischen Schritt e) und Schritt f) mit einer Prägung versehen werden. Dazu kann das Prozessband mit der Gelatinebeschichtung durch zwei Kalanderrollen geführt werden. Die Prägung kann beispielsweise Buchstaben, Logos, Schriftzüge oder Bilder beinhalten.

Ein besonderer Vorteil des erfindungsgemäßen Verfahrens betrifft die Mikrobiologie. Bei der klassischen Herstellung von Blattgelatine werden konventionell große Mengen an verdünnter Gelatinelösung hergestellt und im Batch-Verfahren lange Zeit auf einer bestimmten Temperatur gehalten. Hier vermehren sich Bakterien exponentiell. Das traditionelle Gießverfahren ist ein Rakelverfahren an offener Luft und dadurch exponiert gegenüber Staub und Bakterien, die sich auch an dieser Stelle exponentiell vermehren können. In dem erfindungsgemäßen Verfahren wird die Gelatine innerhalb kürzester Zeit hochkonzentriert aufgelöst, insgesamt ist es ein on-line-Verfahren in einem geschlossenen System. Daher kommt die Gelatine mit Bakterien nicht in Berührung, wodurch die so hergestellte Blattgelatine konstant extrem keimarm ist.

Gegenstand der Erfindung ist auch die nach dem Verfahren mit den Schritten a) bis f) erhältliche Gelatinefolie. Diese eignet sich zur Herstellung von Gelatine-Formteilen durch thermoplastische Verformung mittels Tiefziehen oder Streckformen. Sie eignet sich insbesondere als Tiefziehfolie zur Herstellung von Gelatine-Formteilen durch Tiefziehen.

Gegenstand der Erfindung ist auch die Verwendung der Gelatinefolie zur Herstellung von Gelatine-Formteilen durch Tiefziehen oder Streckformen, insbesondere als Tiefziehfolie zur Herstellung von Gelatine-Formteilen durch Tiefziehen.

Gegenstand der Erfindung ist weiterhin ein Verfahren zur Herstellung von Gelatine-Formteilen umfassend die Schritte a) bis f), wie oben beschrieben, und dem weiteren Schritt:
g) thermoplastische Verformung der Gelatinefolie durch Tiefziehen oder Streckformen zu einem Gelatine-Formteil.

Bevorzugt erfolgt die thermoplastische Verformung der Gelatinefolie durch Tiefziehen einer vorgewärmten Gelatinefolie mit Positiv- und Negativwerkzeug (Formstanzen). In einer weiteren Ausführungsform erfolgt das Tiefziehen mit Stempel und Ziehring zur Herstellung rotationssymmetrischer Hohlkörper, beispielsweise von Verpackungsbehältern.

Beim Streckformen wird der Folienzuschnitt am Rand so fest eingespannt, dass er nicht mehr nachgleiten kann und daher beim Umformen unter Verminderung der Gelatinefoliendicke verstreckt wird. Das Streckformen kann als pneumatisches Streckformen der vorgewärmten Gelatinefolie mit Unterdruck als Vakuumverformung oder mit Überdruck als Blasformen durchgeführt werden.

Die Verfahren sind im Einzelnen in Kunststoffhandbuch 1, Carl Hanser Verlag 1990, Kapitel 4.1.6 "Umformen", beschrieben.

Gegenstand der Erfindung sind auch die so hergestellten Gelatine-Formteile.

Gegenstand der vorliegenden Erfindung ist auch die Verwendung der erfindungsgemäß hergestellten Gelatinefolie als sauerstoffsperrende Barriereschicht. So kann der Permeationskoeffizient der Gelatinefolie für Sauerstoff (O₂) < 500 cm³ × µm/m² × d × bar betragen.

Die Erfindung wird durch die nachstehenden Ausführungsbeispiele näher erläutert.

### Beispiele

### Verfahrensbeschreibung Gelatinefolien-Herstellung

Einem Doppelschneckenextruder werden über bekannte Dosiersysteme Pulvergelatine und Wasser zudosiert. Die Doppelschnecken drehen gleich- oder gegenläufig, vorteilhafterweise gegenläufig. Schnecken und Schneckenzylinder sind aus Edelstahl gefertigt, um Rostbildung zu vermeiden.

Einsetzbar sind Haut- und Knochengelatinen, pig skin-Gelatine, nach saurem oder alkalischem Verfahren hergestellt, im Gallertfestigkeitsbereich von 50 bis 300 Bloom, vorteilhafterweise 230 bis 280 Bloom. Die Pulvergelatine kann fein- oder grobkörnig sein, vorteilhafterweise weist sie 30 mesh auf.

Der Extruder hat 6 bis 15 Stationen, vorteilhafterweise 15 Stationen. Diese können individuell beheizt werden. Die Temperaturen liegen zwischen 40 und 150 °C, vorteilhafterweise zwischen 60 und 90 °C. Die letzte Station des Extruders kann eine Vakuumstation sein, d.h. ein Vakuum wird dort angelegt, um eingeschlossene Luft zu entfernen. So entsteht eine luftblasenfreie Gelatinelösung. Alternativ wird die mit Luftbläschen behaftete Gelatinelösung nach dem Ausgang aus dem Extruder einer separaten Vakuumeinheit zugeführt und dort evakuiert.

Das Pulvergranulat wird mit Raumtemperatur zugegeben, das Trinkwasser wird kalt oder auf 90 °C temperiert zugegeben, vorteilhafterweise bei Temperaturen zwischen 40 bis 70 °C. Geringe Verweilzeiten der Gelatinemoleküle im Extruder bei mäßigen Temperaturen und mäßiger Scherung sichern einen minimalen Bloomverlust (Verlust des Geliervermögens, gemessen als Bloom, d.h. Bindungen im Molekül werden kaum gecrackt). Mischungsverhältnisse Gelatine zu Wasser sind 1:1,8 bis 1:1, vorteilhafterweise 1:1,2 bis 1:1. So entstehen höchstkonzentrierte Gelatinelösungen, die anschließend weiterverarbeitet werden über Gießer und Trockner.

Über geeignete, übliche Pumpen wird diese Gelatinelösung unter Druck einem geeigneten Präzisions-Schlitzgießer zugeführt. Auf ein geeignetes Prozessband (beispielsweise aus Polyäthylen, Polypropylen, Polyester, Polycarbonat oder Polyamid) wird dann diese Gelatinelösung flüssig in geeigneter Schichtdicke aufgetragen, die Schichthöhe beträgt 100 bis 400 µm, vorteilhafterweise 250 bis 350µm, gegossen auf Schichtbreiten von 50 bis 250 cm, vorteilhafterweise auf 100 bis 150 cm Breite, bei Temperaturen von 40 bis 80 °C, vorteilhafterweise 50 bis 70 °C, und anschließend erstarrt (Sol-Gel-Übergang).

Das Prozessband mit der Gelatinebeschichtung wird in einen mehrstufigen Trockner eingeleitet, dort mit konditionierter Luft (z. Bsp. Lithiumchloridbehandlung zur Entfeuchtung der Außenluft, um keimarme, trockene Prozessluft mit Restfeuchte von 6 bis 12 g/kg, vorteilhafterweise 7 bis 9 g/kg, herzustellen). Diese Luft wird vor Beschickung der einzelnen Trocknungszonen auf jeweils definierte, konstante Temperatur von 30 bis 85°, vorteilhafterweise 45 bis 70°C aufgeheizt.

Die Gelatineschicht trocknet auf Restfeuchten von 10 bis 15% Wasser auf und wird vom Träger delaminiert. Alternativ kann die Gelatineschicht auch schon bei 15 bis 25% Restfeuchte delaminiert werden, anschließend wird die Gelatineschicht ohne anhaftenden Träger (Prozessband) in einem zweiten Trockner (Nachtrockner) auf den üblichen Wert von 10 bis 15% Restfeuchte aufgetrocknet.

Die so hergestellte Folie wird auf marktübliche Formate zurechtgeschnitten oder auf einer Rolle aufgewickelt und dem Weiterverarbeiter/Verpacker für die weitere Verarbeitung zugeleitet.

Die Schichtdicke der fertigen Folie ist abhängig von der Schichtdicke der aufgetragenen Gelatinelösung, die nach Trocknen und Schrumpfen bei 50 bis 100 µm, vorteilhafterweise bei 150 bis 200 µm liegt.

### Tiefziehversuche

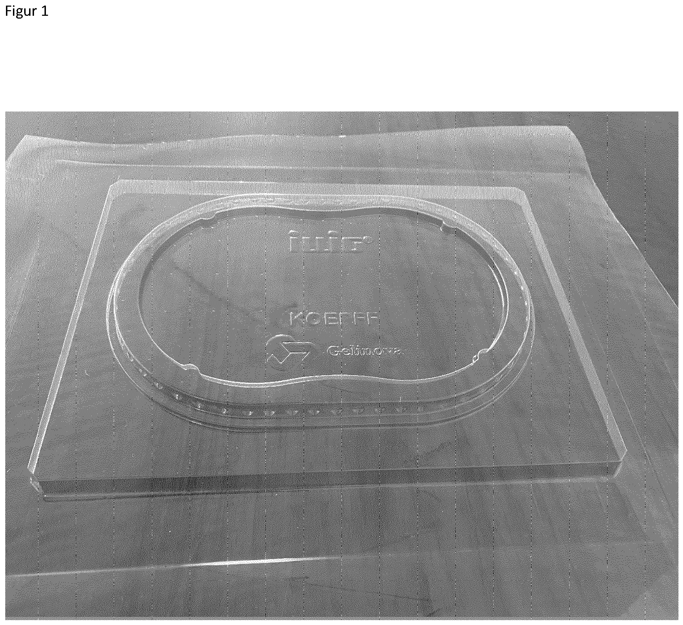

Die Tiefziehversuche wurden mit einem Gerät der Firma Illig durchgeführt. Es wurde eine Gelatinefolie mit einer Dicke von 160 µm und einer Restfeuchte von 13%, die gemäß dem oben beschriebenen Verfahren hergestellt wurde, eingesetzt. Die Gelatinefolie wurde mit einem IR-Strahler über einen Zeitraum von 5 Sekunden bei einer Strahlerleistung von 480 °C erhitzt und anschließend tiefgezogen. Das angelegte Vakuum betrug 0,9 bar. Es wurde eine Schale mit sehr guter Abbildungsqualität erhalten. Diese ist in Figur 1 wiedergegeben.

### Physikalisch-chemische Eigenschaften und Barriereeigenschaften einer erfindungsgemäßen Gelatinefolie

Nach dem oben beschriebenen Verfahren wurde eine biologisch abbaubare, hochtransparente Gelatinefolie für Verpackungszwecke hergestellt. Diese wies folgende Eigenschaften auf:

| | |
|---|---|
| Aussehen: | leicht gelblich |
| Löslichkeit: | in kaltem Wasser quellend, in Wasser oberhalb von 35 °C löslich |
| Schichtstärke: | 100 µm |

| | |
|---|---|
| Wassergehalt: | ca. 11 Gew.-% |
| pH-Wert: | 5,5 - 6 (in 10 gew.-%iger wässriger Lösung) |
| Ascherückstand: | 1,5 Gew.-% |

| | |
|---|---|
| Temperaturstabilität: | bis 85 °C |
| Dichte: | 1250 kg/m³ |
| Reißfestigkeit: | ca. 75 - 100 N/mm² |
| Reißdehnung: | ca. 10% |

| Permeationskoeffizienten: | |
|---|---|
| Sauerstoff (O₂): | < 500 cm³ × µm/m² × d × bar |
| Wasserdampf: | > 50 000 g × µm/ m² × d |

Die Gelatinefolie erwies sich als bis zu einer maximalen relativen Raumfeuchte von 65% als haltbar.

### Verschweißbarkeit

Es wurde überraschend festgestellt, dass eine Gelatinefolie der beschriebenen Art mit einer Dicke von ca. 180 µm und einer Restfeuchte von ca. 12% bei einer Temperatur von ca. 113 °C unter leichter Druckanwendung mit Papier innerhalb weniger Sekunden verschweißt werden kann.

## Patentansprüche

1. Verfahren zur Herstellung einer Gelatinefolie mit den Schritten:
a) Eindosieren von Pulvergelatine, gegebenenfalls von Kollagenhydrolysat, gegebenenfalls von Additiven und von Wasser in einen Extruder,
b) Auflösen der Pulvergelatine, gegebenenfalls von Kollagenhydrolysat und gegebenenfalls von Additiven, in Wasser unter Einwirkung von Scherkräften in dem Extruder, wobei eine wässrige Gelatinelösung mit einem Feststoffgehalt von 30 bis 50 Gew.-% erhalten wird,
c) Entgasen durch Anlegen von Unterdruck an die wässrige Gelatinelösung, wobei eine luftblasenarme oder luftblasenfreie wässrige Gelatinelösung erhalten wird,
d) Ausgießen der wässrigen Gelatinelösung durch eine Schlitzdüse auf einen Träger,
e) Erstarren lassen der Gelatinelösung auf dem Träger zu einer Gelatineschicht,
f) Trocknen der Gelatineschicht zur Gelatinefolie.

2. Verfahren nach Anspruch 1, **dadurch gekennzeichnet, dass** der in den Schritten a) bis c) eingesetzte Extruder ein Doppelschneckenextruder mit gleichläufig oder gegenläufig drehenden Schnecken ist.

3. Verfahren nach Anspruch 1 oder 2, **dadurch gekennzeichnet, dass** das Entgasen in Schritt c) in dem Extruder durch Anlegen von Unterdruck an mindestens eine Zone des Extruders erfolgt.

4. Verfahren nach Anspruch 1 oder 2, **dadurch gekennzeichnet, dass** das Entgasen in Schritt c) in einem separaten Vakuumapparat erfolgt.

5. Verfahren nach einem der Ansprüche 1 bis 4, **dadurch gekennzeichnet, dass** der Träger ein Prozessband ist, und die Gelatinefolie in Schritt f) auf dem Prozessband getrocknet wird.

6. Verfahren nach Anspruch 5, **dadurch gekennzeichnet, dass** in Schritt f) einen Vor- und einen Nachtrocknungsschritt umfasst, wobei die vorgetrocknete Gelatinefolie von dem Prozessband delaminiert wird und ohne Träger einem Nachtrocknungsschritt unterworfen wird.

7. Verfahren nach Anspruch 5 oder 6, **dadurch gekennzeichnet, dass** die von dem Prozessband delaminierte, getrocknete Gelatinefolie zusätzlich mit einem IR-Strahler behandelt wird.

8. Verfahren nach einem der Ansprüche 1 bis 7, **dadurch gekennzeichnet, dass** die getrocknete Gelatinefolie mit Formaldehyd nachbehandelt wird.

9. Verfahren nach einem der Ansprüche 1 bis 8, **dadurch gekennzeichnet, dass** zwischen Schritt e) und Schritt f) die erstarrte Gelatinefolie mit einer Prägung versehen wird.

10. Verfahren nach einem der Ansprüche 1 bis 8, **dadurch gekennzeichnet, dass** die Gelatinefolie mittels eines Lasers bebildert oder beschriftet wird.

11. Verfahren nach einem der Ansprüche 1 bis 10, **dadurch gekennzeichnet, dass** das Gewichtsverhältnis Pulvergelatine und gegebenenfalls Kollagenhydrolysat zu Wasser von 1 : 1 bis 1 : 1.8 beträgt.

12. Verfahren nach einem der Ansprüche 1 bis 11, **dadurch gekennzeichnet, dass** der Feststoffgehalt der wässrigen Gelatinelösung 30 bis 45 Gew.-% beträgt.

13. Verfahren nach einem der Ansprüche 1 bis 12, **dadurch gekennzeichnet, dass** Additive, ausgewählt aus der Gruppe bestehend aus Weichmachern, Vernetzern und Farbmitteln, eindosiert werden.

14. Verfahren nach Anspruch 13, **dadurch gekennzeichnet, dass** als Weichmacher Glycerin zudosiert wird.

15. Gelatinefolie, erhältlich nach dem Verfahren gemäß einem der Ansprüche 1 bis 14.

16. Gelatinefolie nach Anspruch 15 mit einer Folienstärke von 30 bis 500 Mikrometern.

17. Gelatinefolie nach Anspruch 15 oder 16 mit einer Restfeuchte von 5 bis 25 Gew.-%.

18. Verwendung einer Gelatinefolie nach einem der Ansprüche 15 bis 17 zur Herstellung von Gelatine-Formteilen durch Tiefziehen oder Streckformen.

19. Verwendung einer Gelatinefolie nach Anspruch 18 als Tiefziehfolie.

20. Verfahren zur Herstellung von Gelatine-Formteilen umfassend die Schritte a) bis f) gemäß einem der Ansprüche 1 bis 14 und dem weiteren Schritt:
g) thermoplastische Verformung der Gelatinefolie durch Tiefziehen oder Streckziehen zu einem Gelatine-Formteil.

21. Gelatine-Formteile, herstellbar nach dem Verfahren gemäß Anspruch 20.

22. Verwendung einer Gelatinefolie nach einem der Ansprüche 15 bis 17 als sauerstoffsperrende Barriereschicht.
